# EUROPEAN PATENT SPECIFICATION

(11) **EP 1 345 489 B1**
(45) Date of publication and mention of the grant of the patent: **01.10.2008**
(21) Application number: 01999274.2
(22) Date of filing: 05.12.2001
(51) Int. Cl.: A01G 23/083

(54) **CONTROL METHOD AND APPARATUS OF A TREE HARVESTING MACHINE**
STEUERUNGSVERFAHREN UND -VORRICHTUNG FÜR EINE BAUMERNTEMASCHINE
PROCEDE ET APPAREIL DE COMMANDE DE MACHINE RECOLTEUSE D'ARBRE

(30) Priority: 05.12.2000 FI 20002671
(43) Date of publication of application: 24.09.2003
(73) Proprietor: John Deere Forestry Oy, 33101 Tampere (FI)
(72) Inventor: PESIÖ, Mauri, FIN-33710 Tampere (FI); LAMMINEN, Matti, FIN-33300 Tampere (FI)
(74) Representative: Pursiainen, Timo Pekka
(86) International application number: PCT/FI2001/001058
(87) International publication number: WO 2002/045482

(56) References cited:
- WO-A1-99/35900
- SE-L- 9 801 522
- SE-L- 9 902 054

## Description

The invention relates to a method for controlling a tree harvesting machine, which is presented in the preamble of the appended claim 1. The invention also relates to a control apparatus which is of the type presented in the preamble of the appended claim 16.

The invention is intended for use in forest machines movable in the terrain, such as grapple harvesters. Such forest machines have a tree manipulating part, a grapple, at the end of an arm arranged movable in a body. The part comprises a cross-cutting saw for cutting off a tree and cutting it into lengths of determined size, as well as a tree feeding device for feeding the cut tree forward. Forest machines of this type are presented *e*.*g*. in European patent 428530, Finnish patent 79927 and US patent 4,742,854.

Upon starting the processing of trees cut with such machines, the butt end of the tree is between feeding means, such as rolls or wheels, and it is also supported by delimbing blades. The feeding device pushes the stem past the cross-cutting saw a distance corresponding to the cutting length. Particularly with thick stems, the weight of the stem becomes so high that it tends to bend the tree at the cutting point so that the cutting track does not become even and damage may be caused to the tree, in the worst case cracks.

In a cutting situation, it is not possible to support the tree on the butt end side, because the cross-cutting saw is the lowest means in the tree manipulating part, *i.e.* the means closest to the butt end at the cutting point, and it has to fit lowest in the cutting off of the tree, *i.e.* as close to the ground as possible.

Swedish published specification 409431 presents a device for cutting a felled tree, in which the saw swinging from below upwards during the cutting movement is followed by a wedge means to avoid cracks in the remaining part of the tree, as well as sticking of the saw. In the swinging motion from above downwards, which is recommended for smaller stems, no auxiliary means are used to prevent cracks. The cutting device in question is not intended for a tree harvesting machine movable in the terrain.

International publication WO 99/35900 and Finnish patent 113 002 B present a method in which it is essential that the tree supporting part is moved particularly at the moment of cutting to compensate for this bending force due to the weight of the stem. By means of control automatics, a momentary dropping movement is produced and timed precisely at the moment of action of the cross-cutting saw, to make the bending moment at the time of cutting as close to zero as possible, or at least considerably smaller than without the movement. The function is performed automatically by means of the control automatics of the machine at the right moment in the cutting sequence of the stem without the operator needing to produce it by his own special manual measures by manoeuvering respective actuators.

In practice, the movement of dropping the tree to be cut, supported by the grapple, is accomplished by discharging some pressurized medium momentarily from the lifting cylinder of the boom assembly supporting the grapple. The pressure reduction can be implemented with a specific flow control valve which releases some pressurized medium from the load supporting side of the lifting cylinder for a short time. The action can be timed to take place e.g. at a specific work stage of the cross-cutting saw. The movement is determined by the size of the aperture, the open period and the closing rate of the flow control valve, which have been set in advance.

By the method, it is possible to considerably reduce damage in connection with the cross cutting and to avoid problems with the quality of logs intended as high-quality timber. However, it has now been found that the downward acceleration of the tree in the grapple is not always the same but depends on different factors. Thus, as the acceleration varies, a situation may occur, in which, under extreme conditions, the stop of the dropping movement at high accelerations becomes abrupt and, at low accelerations, the required effect is not accomplished and the causing of a crack cannot be prevented, even though the operation were appropriate in most cases.

The aim of the invention is to eliminate said disadvantages and to present a method and an apparatus for the more precise control of the cross cutting stage of a tree harvesting machine. To attain this purpose, the method according to the invention is primarily characterized in what will be presented in the characterizing part of the appended claim 1. The dropping movement is thus dependent on one or more variables measured before the moment of cross cutting. These variables are, above all, dependent on the position of the tree in the grapple in relation to the machine, and they can be determined in different ways; for example, the position data of the tree (extension of the boom assembly) can be measured by means of various position sensors arranged in the boom assembly. The dimensions of the tree play also a role. It is often important to know the diameter of the tree and/or the load caused by the tree, to control the dropping movement, and this data can be determined, for example, by means of measuring data obtained from the tree to be cut off. The diameter of the tree can be determined, for example, by means of measuring sensors in the grapple. The load caused by the tree can be determined, for example, by means of direct weighing of the tree in the grapple, by using a weighing device which can measure the force caused by the load at the end of the boom assembly. It is also possible to determine the load indirectly on the basis of measuring data obtained about the tree to be cut off, for example by utilizing data given by measuring sensors in the grapple (e.g. the change in the diameter during the feeding, and the feed length). The load caused by the tree can thus be determined by a suitable program on the basis of measuring data obtained about the tree to be processed in the grapple, because these data can be used to compute the mass and, in a corresponding manner, the weight, when the density of the tree is known. The weight of the tree (based on the mass of the tree) may be sufficient data, but, from the weight and the position of the tree, it is, in turn, possible to compute the load caused by the tree.

The control of the down movement, depending on one or more variables measured before the moment of cross cutting, is the control of the operating values inherent in the event of movement itself (effective during the movement). These operating values do not include the moment of starting the movement, which can be determined for example according to prior art known in WO 99/35900. In the invention, it is the movement occurring after the moment of starting the movement that should be influenced, on the basis of one or more variables measured in advance.

It is also possible to determine the force caused on the boom assembly by the tree to be cut off, supported in the grapple, and by the rest of the mass of the boom assembly, or a variable proportional to the force, for example the pressure caused by the load on the pressurized medium system. The pressure can be measured with a pressure sensor placed in a suitable location. The pressure sensor can measure for example the pressure effective in an actuator, such as a hydraulic cylinder, as a result of the load. On the basis of this pressure data and possibly data representing the dimensions of the tree, or weighing data, it is possible to control the flow of pressurized medium off this same actuator, to optimize the dropping movement of the tree.

It has been found that the acceleration of the end of the boom assembly in the direction of earth's gravity is particularly dependent on the extension of the boom assembly. When the extension of the boom assembly is used to predict the acceleration, the following alternatives are available:
1. The extension is determined directly (*e*.*g*. position sensors in the boom assembly).
2. The extension is determined indirectly from the boom assembly by measuring the extension-dependent pressure or force and by determining the load caused by the tree.
   i) The load caused by the tree is determined directly by weighing with a method which is not dependent on the extension to be determined (weighing device).
   ii) The load caused by the tree is determined indirectly by measuring the size of the tree.
      - The location of the centre of gravity of the tree is disregarded.
      - The location of the centre of gravity of the tree is also regarded.

The ways of determining these variables have already been described above, and they will be discussed in more detail below.

The operating values of the control means controlling the dropping movement are set automatically on the basis of one or more variables which have been measured/determined before the moment of cross cutting.

The control apparatus for implementing the invention is, in turn, primarily characterized in what will be presented in the characterizing part of the appended claim 16. The operations of the invention can be implemented with an apparatus comprising one or more sensors for determining one or more variables affecting the dropping movement of the tree to be cut, and computing and control means in connection with the sensor/sensors, arranged to determine the operating values of the control means controlling the dropping movement and to control said control means accordingly. Depending on the variable/variables, the means is controlled so that it has the most appropriate effect on the movement during the movement.

In the following, the invention will be described in more detail with reference to the appended drawings, in which
- Fig. 1: shows a tree supporting part of a forest machine in a general view,
- Fig. 2a: shows the part and a boom assembly in a situation of operation before the critical cutting stage, with a short extension,
- Fig. 2b: shows the part and the boom assembly before the critical cutting stage, with a long extension,
- Fig. 3: shows, in a simplified schematic view, factors which are effective during the support of the tree by means of the boom assembly,
- Figs 4 and 5: illustrate the dependence of the dropping movement on different factors,
- Fig. 6: shows a hydraulic diagram for implementing the invention, and
- Fig. 7: shows the operation of a control means in different situations.

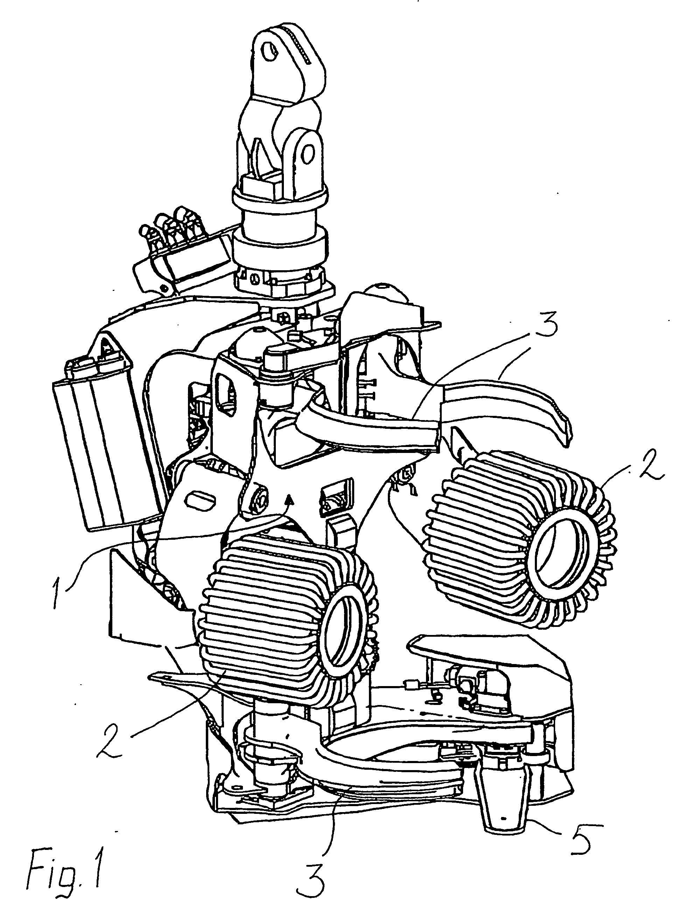

Figure 1 shows a tree supporting and manipulating part 1, grapple, fixed at the end of a hydraulically driven boom assembly of a forest machine, in this case a grapple harvester. The frame of the grapple is equipped with a feeding device 2, which in the case shown in the figure consists of two feeding rollers articulated in the frame so that they can be moved towards the tree stem left therebetween by suitable actuators so that the tree stem is pressed between them. It is also possible to use other kinds of feeding devices. Furthermore, the body of the tree supporting part 1 is provided with hydraulically movable delimbing blades 3 which delimb the branches of the tree when the stem is moving, pulled by the feeding device 2. The blades, positioned on both sides of the feeding device in the direction of the stem, can also be used to clamp and support the stem. At the butt end, the part 1 is equipped with a hydraulically driven chain saw 5, with which the tree stem is cross-cut at the butt end and thereafter cut into logs of suitable length.

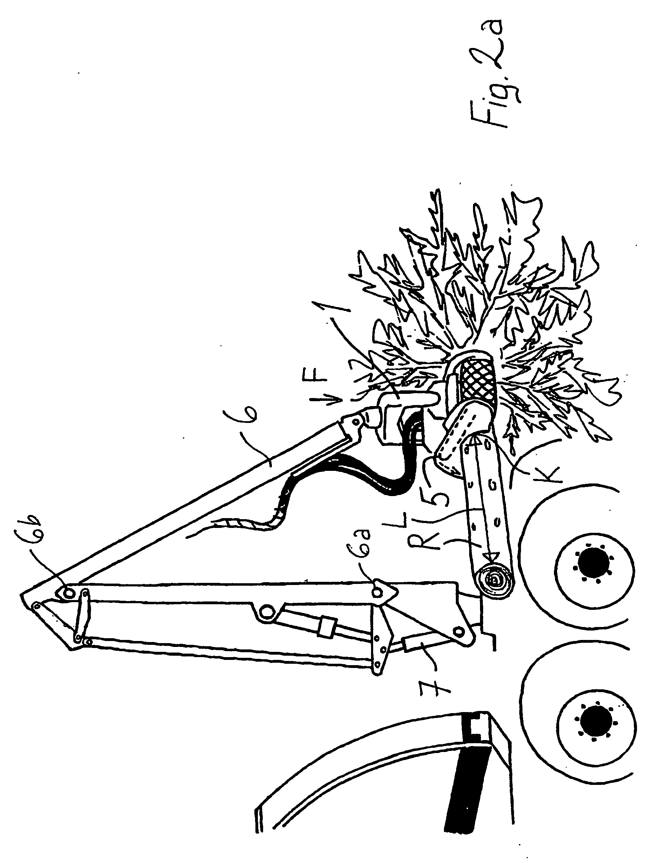

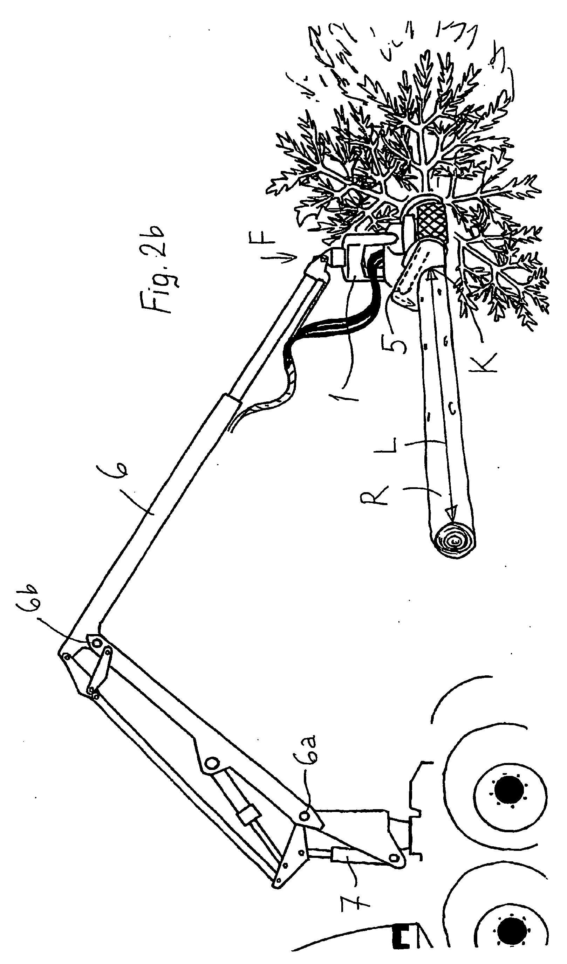

Figures 2a and 2b show the situation after the tree R has been cross-cut at the butt end, it has fallen down and is supported by the part 1, and the feeding device 2 has fed the tree stem a certain length L, the butt end ahead, to a first cutting point K. The chain saw 5 is arranged to swing by the effect of the feeding cylinder of the saw from above downwards (arrow) to perform the cutting. At the cutting point K, the weight of the stem section fed forward and hanging freely causes a bending moment which tends to bend the tree at the cutting point when the saw penetrates the tree in the direction of the arrow. Underneath the cutting edge of the saw, the section to be cut is fixed to the rest of the tree and thereby to the tree supporting part 1 via a continuously decreasing area. Thus, in the worst case, the tree is broken at the cutting point, leaving a small tongue at said area in the stem that has been cut off. In a slightly generalized manner, it can be stated that this phenomenon is the same as occurs when a long tree is cut on a sawhorse and the portion of the tree in the air outside the sawhorse is heavy.

At the moment of sawing, preferably already after the feeding movement of the saw has started, a jerk-like movement is induced by means of the control automatics of the tree harvesting machine in the boom assembly 6 supporting the part 1 in such a way that the part 1 will suddenly move downwards in the direction of arrow F. The movement is sudden, but the length of the movement needs only to be short so that the bending moment is compensated for by the inertial forces of the stem R of the tree at least for the period of time until the saw has completed the cutting. Such a movement can be generated simply e.g. by utilizing the weight of the boom assembly 6, the tree supporting part 1 and the tree itself, that is, by releasing for a short time any of the actuators of the boom assembly which acts against earth's gravity and is capable of keeping the part 1 in its height position.

The operating time of the cross-cutting saw 5 is very short, often less than a second. For stems with a large diameter, in which the cracking problem particularly occurs, it can be longer than a second. Thanks to the relatively short time of operation, it is possible to use the jerking movement to achieve compensation for the bending moment precisely for the period of time which is most critical in view of the final result of the sawing. The movement can be timed e.g. according to the feeding movement of the saw, and it is started preferably at the time when it is detected by the control automatics that the feeding of the saw has started or the saw has penetrated the tree. It is important that the movement is not timed at a too early moment, because after the compensating movement has stopped, inertial forces will raise the bending moment considerably higher than the original, if the stem portion to be cut is still attached to the rest of the stem. The movement may preferably last slightly past the cutting stage rather than fall short. The required lengths of movement are not long, but the movement should be sufficiently fast.

Figures 2a and 2b also show a boom assembly 6 consisting of swinging arms and arranged in the body of the forest machine to pivot around a vertical axis, a tree supporting and manipulating part 1 hanging at the end of the boom assembly 6. Reference numeral 7 indicates a cylinder supporting the boom assembly in its height position, *i*.*e*. a lifting cylinder, which is arranged to lift and to lower that arm of the boom assembly which is closest to the body. When the cut tree is supported by the part 1 and the saw 5 is ready to perform the first cutting, the cylinder 7 is pressurized and keeps the boom assembly 6 in the height position to which it has been actively adjusted by the cylinder. When the saw 5 is in operation, the cylinder is released from pressure for a short time, wherein the part 1 descends correspondingly downwards in a jerk-like manner. The position can be gradually restored with the cylinder before the next cutting operation.

The actuator producing the movement according to the invention, such as the above-presented hydraulic cylinder, can receive its operation command from the position of the control means affecting the operation of the cross-cutting saw 5. The start of the operation of the means controlling the dropping movement (the means releasing the pressure of the hydraulic cylinder) can be timed as presented, for example, in the international publication WO 99/35900. The operation can be automatically triggered *e.g.* by the control of a directional valve in the feeding cylinder of the saw 5; that is, after it has moved to the position producing the feeding movement of the saw, data is transmitted to the actuator. It is also possible to use sensors or switches located in the part 1 and recognizing the swinging position of the saw. In order to time the start of the operation of the means controlling the dropping movement and the actuator effecting the movement correctly with respect to the cutting stage, the controlling means can be arranged to operate with a suitable delay with respect to the control means of the saw, for example in such a way that the movement starts first after the saw has penetrated the tree in a certain depth.

Preferably, the part 1 is lowered down in a sudden movement so that the action in question is dependent on the position of the cross-cutting saw. The action is synchronized with the position of the cross-cutting saw so that when it is in a predetermined position, a guide position, the control system issues automatically a command to effect a fast movement downwards. The position of the saw can be detected either indirectly by measuring time or by means of position sensing sensors placed in the part 1, e.g. on the basis of the stage of the stroke of the saw feeding cylinder, the action of a limit switch dependent on the motion of the saw, or an angle sensor indicating the position of the saw. The guide position is not necessarily constant but it can also be determined by using data obtained from the measurement of the diameter of the tree and from the measurement of its feeding length, in other words how long a portion of the tree is free and how thick the tree to be cut is, these factors correlating with the susceptibility to cracking. It is thus possible to calculate the guide position by means of the measurement data immediately before the cutting of the tree, and to proceed accordingly.

In the determination of the moment to start the downwards directed movement, also delays in the control system are taken into account, including the time constants of various valves. This can be taken into account in the determination of the guide position of the saw.

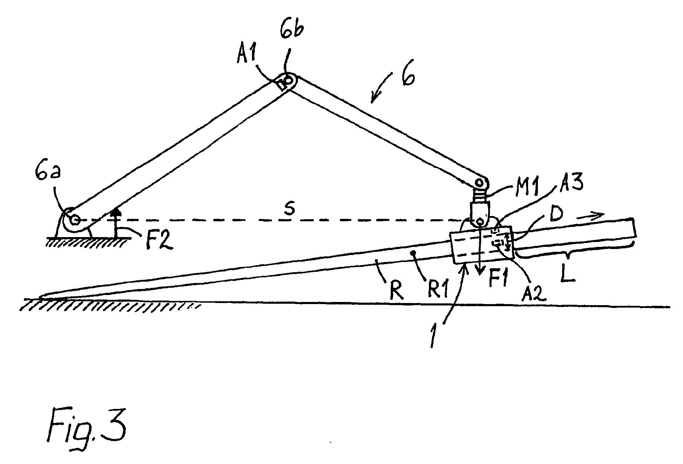

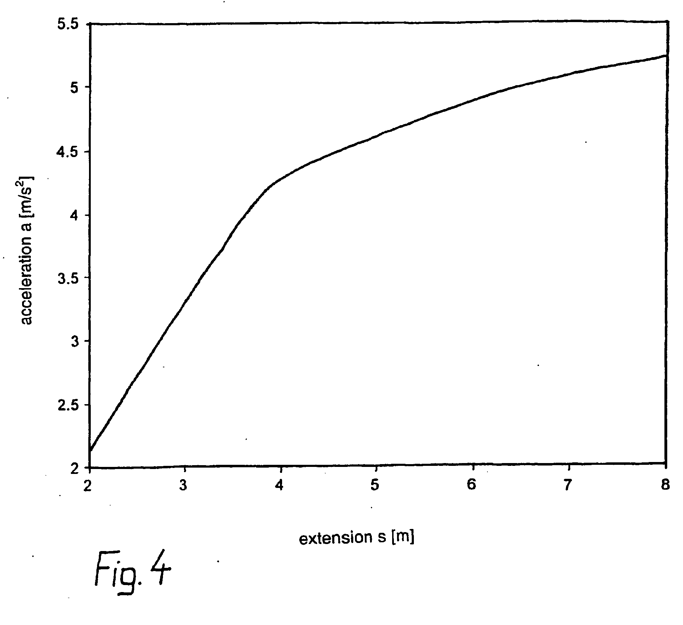

However, the acceleration of the falling movement of the tree supporting part 1 and the tree is not constant but it depends on different factors. Figure 3 shows said factors in a schematic view. Although the acceleration caused by earth's gravity should always be the same, irrespective of the mass of the falling piece, the suspension of the tree R at the end of the articulated boom assembly causes that the acceleration is affected by other factors, such as the extension of the boom assembly and possibly the weight of the tree or the load caused by the weight at the end of the boom assembly. The boom assembly 6, which can be pivoted in the vertical plane in relation to a pivot 6a and which, in the case shown in the schema, comprises at least two arms articulated to each other, constitutes a kind of a lever. The extension s of the boom assembly, that is, the length of the lever (the distance of the line of action of the load F1 at the end of the boom assembly 6 from the pivot 6a), is variable. The boom assembly 6 can also be pivoted in the horizontal direction, but in view of the operation of the invention, the boom assembly 6, the tree supporting part 1 at its end, and the tree R held up by the tree supporting part 1 are here considered only as a kinematic system pivoting in the vertical plane in relation to the pivot 6b, and particularly falling down in a pivoting movement in relation thereto. The extension has a particularly important effect on the acceleration in the direction of earth's gravity, due to the variation in the distance between the centre of gravity of said kinematic system and the tree R at the end of the boom assembly 6. If the tree R is distant from that pivot 6a of the boom assembly, around which the boom assembly pivots in connection with the dropping movement (large reach), the tree is also distant from the centre of gravity of the kinematic system pivoting around said pivot 6a, which centre of gravity can be considered to be the point of action of earth's gravity. Figure 4 illustrates the acceleration of the end of the boom in the direction of earth's gravity as a function of the position (extension) of the boom, *i.e.* the distance between the tree R and the pivot 6a of the boom assembly.

During the operation of the tree harvesting machine, it is possible to measure the reach of the boom assembly 6 with one or more position sensors, such as angle sensors placed in the joints of the boom assembly, or position sensors of the cylinders controlling the pivoting of the joints. Sensors are arranged in the boom assembly in a sufficient number for determining the distance between the end of the boom assembly (the grapple, or the tree supporting part 1) and the pivot of the dropping movement. Figure 3 shows one such sensor, which is an angle sensor placed in the pivoting joint 6b between the arms of the boom assembly, indicated with reference A1. If the length of the arms in the boom assembly is constant, the magnitude of the angle will indicate the extension at a sufficient precision. On the other hand, for example the extension of a parallel-type crane shown in Figs. 2a and 2b can be measured by two sensors, of which one measures the position of the folding joint 6b, for example by means of an angle sensor in the joint or by measuring the position of the actuator, such as a folding cylinder, having effect on the position of the joint, and the other measures the position of the movable extension of the outer boom (arm).

The schema of Fig. 3 also shows that the magnitude of the moment, which is effective at the pivot 6a and dependent on the position of the centre of gravity of said kinematic system, can be measured by measuring the force F2 corresponding to this moment between the boom assembly 6 and a supporting point (e.g. the machine body), that is, the load effective between the parts on both sides of the pivot 6a caused by supporting the boom assembly 6 (including the tree supporting part 1) and the tree R. This can also be a variable proportional to the force, such as the pressure. It is thus possible to measure a variable which is, to some extent, dependent on the extension s. The mass, and correspondingly the weight, of the boom assembly 6 and the tree supporting part 1 is constant, but the size (and correspondingly the mass) and the position of the tree R, and thereby the load caused by the tree at the end of the boom assembly 6 may vary. Since a part of the moment measured via the force F2 or the pressure is formed by the product of the extension s and the load caused by the tree R, one should also know the force F1 which is effective at the end of the boom assembly, dependent on the tree but independent of the extension s, to achieve a better result in determining the extension. In this context, it should be mentioned that the arrows in Fig. 3 are not intended to illustrate the magnitude of the forces but they are merely intended to illustrate the points of action and measurement of the forces F1 and F2.

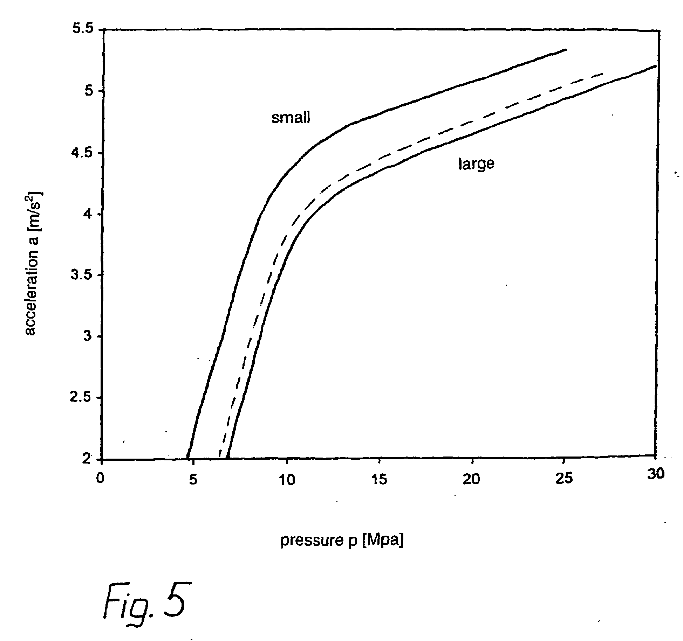

Figure 5 illustrates the significance of the size and position of the tree, and it shows the dependence of acceleration of the end of the boom assembly 6 in the direction of earth's gravity on the pressure of the lifting cylinder of the boom assembly with trees of different sizes. The term "large" refers to a tree, whose diameter at the cutting point is 30 cm, whose length is 22 m, and which has been fed with a grapple 6 m before the cutting, *i.e.* the length to be cut as measured from the grapple in the feeding direction is 6 m. The term "small" refers to a tree whose diameter at the point of cutting is 16 cm, whose length is 12 m and which has been fed 4 m before the cutting.

The curve in Fig. 5 shows two cases, but in practice, several different curves are used, which all correspond to a certain measured size of the tree.

In the curve of Fig. 5, it has been taken into account that the top part of the felled tree is supported to the ground, and that a given length of the tree with a given size has been fed past the cross-cutting saw before the cutting. The schema of Fig. 3 shows the significance of the feeding length, *i.e.* the position of the centre R1 of gravity of the tree R. The position of the centre R1 of gravity of the tree in relation to the grapple is significant in how the weight of the tree, caused by the mass of the tree, affects the grapple and the force F1, *i.e.* the load. If, for example, the curve "big" of Fig. 5 is used, but less than 6 metres of the tree have been fed, the force F1 will be smaller, and a smaller pressure reading will be obtained with the same extension, and, when computing by means of the curve, a smaller expected acceleration will be obtained than in reality. The correct curve, which should be used in this case, is marked with a broken line. If small inaccuracies caused by these factors when using a determation method based on the dimensions of the tree (diameter data during the feeding) are to be minimized, it is also possible to take the length L of the tree portion fed past the saw as one independent variable when determining the operating values for the means controlling the falling movement. Figure 3 shows measuring sensors placed in the tree supporting part 1 and indicated in a schematic manner with the references A2 and A3. One of the sensors measures continuously the diameter D and the other measures the feeding length L from the cutting point to the free end of the tree. As sensors in this part, it is possible to use sensor solutions for the grapple of a tree harvesting machine which are known as such.

The simplest way is to determine, by measurement (diameter data during the feeding of the tree, feeding length and computing software), the size of the tree and, on the basis of that, the mass and weight of the tree, disregarding the location of the centre of gravity of the tree, wherein it is also possible to achieve a sufficient accuracy when using the method according to the principle of Fig. 5. The position of the centre of gravity in the tree can be defined after determining, by means of measurement data, the diameter of the felled tree as a function of the feeding length (shape) and correspondingly the mass distribution in the longitudinal direction of the tree, and when the feeding length is known (how much of the tree has been fed forward in relation to the grapple), the position of the centre of gravity of the tree in relation to the grapple is also known.

If the load F1 caused by the tree is weighed by a weighing device at the end of the boom assembly 6, indicated in a schematic manner with the reference M1 in Fig. 3, the correct value is directly obtained, which already includes the effect of the feeding length of the tree (position of the centre of gravity R1). From the reading of the weighing device M1, it is thus possible to subtract the weight (tare) which is due to the constant mass in the weighing, such as the weight of the grapple, if the weighing device is between the grapple and the end of the boom assembly. In this way, the net load F1 caused by the tree R is obtained. The sole independent variables in the weighing method are the pressure reading of the lifting cylinder of the boom assembly and the weighing reading. In this measuring method, it is possible to use, as a basis, curves similar to that shown in Fig. 5, describing the acceleration as a function of the pressure of the lifting cylinder for different weighing readings.

As indicated in Fig. 4, the position of the boom assembly tells, at a sufficient accuracy, the expected acceleration of free fall irrespective of the size of the tree. The operating values of the means controlling the dropping movement can thus be set by means of position sensors which measure the position of the end of the boom assembly, that is, which give the necessary data for determining the extension, of which sensors some examples have been given above. On the basis of the measuring data, it is possible to set, for example, the open period, aperture and closing rate of the directional valve allowing pressurized medium to flow from the lifting cylinder of the boom assembly, *i*.*e*. those of the "dropping valve" to be described below. The moment of starting the operation can be determined on the basis of the operation of the saw according to the principles described above.

According to Fig. 5, the expected acceleration of fall can be determined by measuring the pressure of that load-supporting cylinder which is released to implement the falling movement. At the same time, also the load caused by the weight of the tree is determined by weighing, or by means of measurement data provided by sensors in the grapple and related to the dimensions of the tree and by means of a program for processing the data. As shown in Fig. 5, the pressure and the size and position of the tree (the weight of the tree and the load caused by it) indicate the expected acceleration of fall. The operating values of the directional valve (dropping valve) are computed on the basis of the obtained measurement data.

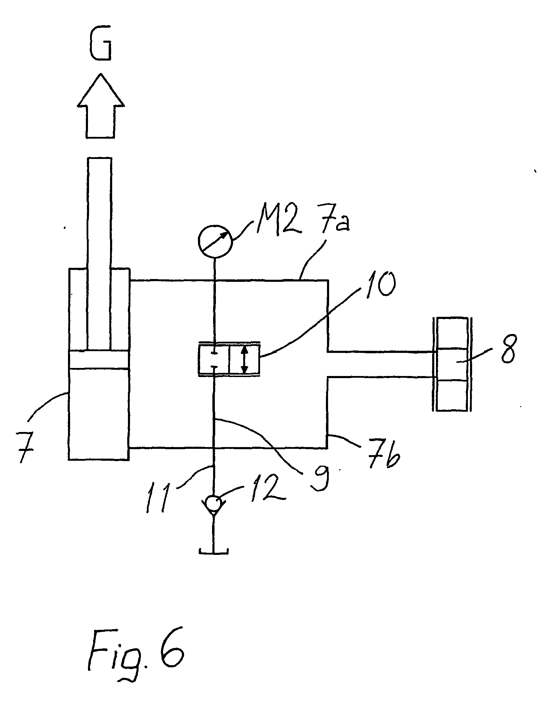

Figure 6 shows a hydraulic diagram which can be used to implement the invention. The figure shows a lifting cylinder 7 which acts in supporting the load against earth's gravity and in which the direction of the load caused by supporting the tree (and the boom assembly) in the direction of traction is indicated with the letter G. The cylinder 7 is also shown in Figs. 2a and 2b. On both sides of the piston of the cylinder 7, pressurized medium lines 7a, 7b are led from a directional valve 8 (4/3 valve) to control the direction of movement of the cylinder. The lines 7a, 7b entering the different sides of the piston are interconnected by a connecting line 9 in which is placed a directional valve 10, so-called dropping valve, acting as the control means of the dropping movement. The valve 10 is an electrically controlled 2/2 proportional valve, whose magnitude of aperture can be adjusted. Also the opening rate, closing rate and the open period of the valve can be adjusted. When the tree at the end of the boom assembly is to be dropped down for a given time, the valve 10 is opened for a predetermined time, wherein it releases some pressurized medium, for example hydraulic oil, from that side of the cylinder 7 which is subjected to the load of the tree and the boom assembly. The valve 10 opens the connection from the line 7a to the line 7b. To avoid cavitation, a tank line 11 with a check valve 12 is also connected to the line 7b entering the unloaded side of the cylinder.

The valve 10 receives the control commands from computing means which can be a part of the data processing and automation system of the tree harvesting machine and which determine, by means of data provided by one or more position sensors of the boom assembly or sensors measuring the size of the tree and a pressure measuring sensor, the operating values of the dropping valve 10, particularly its aperture, open period and/or closing rate. Figure 6 shows a pressure measurement sensor M2 which measures the pressure on the loaded side of the cylinder 7 to determine the operating values of the valve 10 in accordance to Fig. 5.

If the cylinder 7 is on the opposite side of the boom assembly to that shown in Figs. 2a and 2b, the load caused by the weight of the tree and the parts of the boom assembly acts in the compressive direction, that is, it tends to compress the hydraulic cylinder. The couplings of Fig. 6 are thus made analogically; for example, the pressure measurement sensor M2 does not measure the pressure in the chamber on the side of the piston rod but in the chamber on the side of the cylinder.

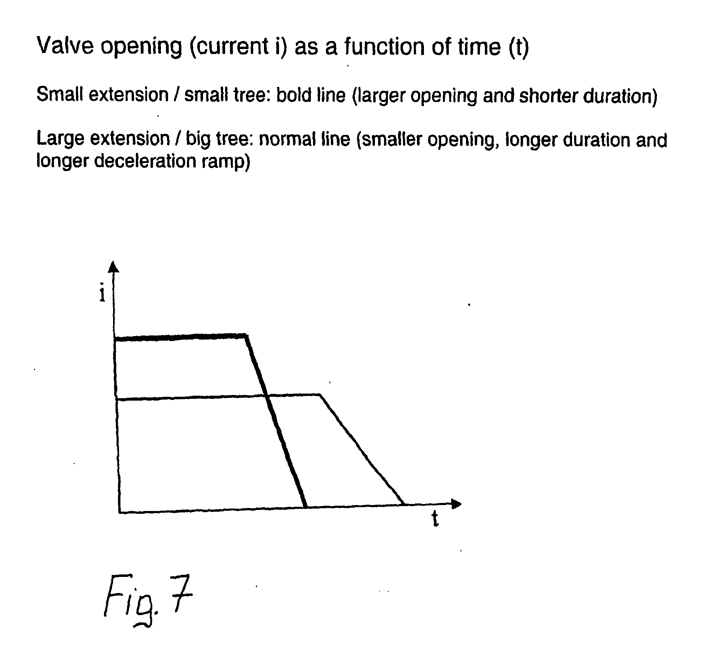

According to an advantageous embodiment, the operating values of the valve 10 are set so that the acceleration remains constant, irrespective of the extension of the boom assembly. Figure 7 shows an example how the aperture of the valve 10, the duration of its being open, and its closing rate can be predetermined on the basis of values measured in advance (valve control current i as a function of time t). The principle is that the aperture will be affected by the expected acceleration of free fall, which is determined by the determining method of Fig. 4 or 5, the duration of being open will be affected by the diameter of the tree to be sawn, and the closing rate (deceleration ramp) will be affected by the weight of the tree. For example, using Fig. 4 as a starting point, that is, the extension of the boom assembly is measured e.g. with position sensors, a larger aperture (bold line) is used for a small extension (low expected acceleration). In a corresponding manner, a smaller aperture (normal line) is set for a large extension (high expected acceleration). Although information about the properties or effects of the tree is not necessarily required, when the acceleration is determined on the basis of Fig. 4, it is required for setting the closing rate. For heavy loads caused by the tree, a longer deceleration ramp is set (normal line). Thus, with heavy loads caused by the tree, the stop of the movement will not be too abrupt. The load can be determined by any of the above-described methods by weighing or by measuring the size. With a small tree diameter, a shorter duration (bold line) is used, and with a large tree diameter, a longer duration (normal line) is used, because the duration of the sawing itself is dependent on the diameter. Thus, even if the measuring or weighing data of the tree were not needed to determine the acceleration, it is useful to measure at least the diameter of the tree, if the duration is to be adjusted. Although the moment of starting is at the same point on the t-axis in Fig. 7, it can vary in relation to the starting moment of the operation of the saw, e.g. depending on the above-described guide position of the cross-cutting saw. Naturally, not only the above-presented combinations are in use, but the control automatics may contain a stored operational curve corresponding to each measurement data or combination of measurement data, or there can be an algorithm for computing the operating values of the valve (aperture, duration, deceleration ramp) on the basis of the measurement data.

If the release valve 10 is pressure compensated to such an extent that the load does not affect the volume flow rate through the valve, the flow is dependent on the aperture of the valve. The less there is pressure compensation in the valve, the more the mass of the tree must be taken into account when setting the aperture of the valve.

The target value or set value for the acceleration can be determined by measurements to predict the acceleration (Figs. 4 and 5), and the operating value of the control means affecting the acceleration, such as the aperture of the valve, is set accordingly. Furthermore, it is possible to use the sensors A2, A3 in the grapple to determine the size of the tree fed past the saw, *i.e.* the size of the portion to be cut off (on the basis of the diameter and the feeding length). This correlates with the susceptibility to cracking, and the acceleration can be determined as the "need of acceleration"; in other words, the aim is not to achieve the same acceleration but an acceleration calculated with a correcting factor, and the operating value for the control means affecting the acceleration, such as the aperture of the valve, is set accordingly. Consequently, in practice, the target value or set value for the acceleration is thus determined by means of two factors: the predicted acceleration and the variable indicating the susceptibility to cracking, and the aperture of the valve is set accordingly. The same measuring sensors of the grapple can thus be used to determine both the load caused by the tree and the susceptibility to cracking, by the same measurement.

The invention is not restricted to the embodiments described above, but it can be modified within the scope of the inventive idea presented in the claims. The cylinder which is released for a short time to accomplish the dropping movement can also be another cylinder of the boom assembly than the lifting cylinder, and thus, in a corresponding manner, the extension must be determined by using as the zero point the joint turned by said cylinder, which is the pivot of the dropping movement. Furthermore, it is possible that when operating on the basis of Fig. 5, the size/position of the tree or the load caused by it is not measured at all, but the measuring data obtained from the boom assembly about the force or pressure is solely utilized, because the acceleration will change most clearly as its function. Also, it is possible that, with predetermined extension values of the boom or with predetermined values of the force or pressure, the operating values of the control means (e.g. dropping valve) are constant, whereas within critical ranges (*e*.*g*. in the steeply rising graph portions of Figs. 4 and 5), the values are set before the dropping function again and again by computing them on the basis of the obtained measurement data.

Similarly, it is possible that the operation is only in use when the first log is cut off from a felled tree, but the operation can be used during several cuttings of the same felled tree, wherein before a new cutting, the variables are determined again and the operating values of the control means are reset.

It is also obvious that, for computing the operating values of the control means, there is no need to determine the variables (pressure, force, extension, tree diameter, load caused by the tree) as absolute numerical values, but it is sufficient that the respective sensors give values which are proportional to said variables and which are sufficient for computing purposes as such. In the same way, the above-presented curves are intended to illustrate the principles of determining the operating values of the control means, and in practice, the program computes the operating values with calculation formulas in which the values measured by the different sensors serve as variables.

Moreover, the invention is not necessarily limited solely to apparatuses in which the dropping function is automatic, but it could be appreciated that one or more operating values of the control means controlling the dropping movement is set automatically by any of the principles described above but the operation of the control means is triggered manually at the correct moment, that is, the starting moment of its operation is not automatically determined. However, it is obvious that the most advantageous solution is to arrange the starting moment of the operation of the control means automatically controllable on the basis of the controls of the tree harvesting machine and the status data of its various members.

## Claims

1. A control method for a tree harvesting machine, wherein the tree harvesting machine comprises a tree-supporting part (1) with a feeding means (2) for feeding a tree in its longitudinal direction and a cross-cutting saw (5) for cutting the tree at selected locations, wherein said part (1) is supported by a boom assembly (6) or the like, and at the moment of action of the cross-cutting saw (5), the tree-supporting part (1) is moved downwards, preferably automatically by means of the control automatics of the tree harvesting machine, so that the force caused by the weight of the tree, tending to bend the tree (R) at the cutting point (K) and thereby tending to cleave the tree, is at least partly compensated for, **characterized in that t**he movement, which is movement occurring after the moment of its starting, is controlled on the basis of one or more following variables measured before the moment of cross-cutting:
- the extension(s) of the boom assembly (6);
- the force (F2) caused by the supporting of the tree and by the boom assembly (6), or a variable dependent thereon.

2. The method according to claim 1, **characterized in that** the extension(s) is measured by means of one or more position sensors (A1) of the boom assembly (6).

3. The method according to claim 1, **characterized in that** the pressure caused by the force (F2) is measured from the pressurized medium system of the boom assembly (6).

4. The method according to any of the preceding claims, **characterized in that** one or more variables correlating with the size of the tree (R) and preferably also with the position of the tree are also determined and used as one variable.

5. The method according to claim 4, **characterized in that** one variable is at least one of the following: the weight of the tree, the load (F1) caused by the tree, and the diameter (D) of the tree.

6. The method according to claims 1 and 4 or claims 3 and 4, **characterized in that** both the force (F2) or a variable dependent thereon, such as pressure, and a variable correlating with the size of the tree and preferably also with the position of the tree are determined.

7. The method according to claim 6, **characterized in that** both the force (F2) or a variable dependent thereon, such as the pressure, and the weight of the tree or the load (F1) caused by the tree are determined.

8. The method according to any of the preceding claims, **characterized in that** on the basis of one or more variables, a set value is determined for the acceleration, and the movement (F) is controlled in such a way that the set value is met.

9. The method according to claim 8, **characterized in that** the set value is determined for the acceleration at least on the basis of the expected acceleration.

10. The method according to claim 9, **characterized in that i**n the determination of the set value for the acceleration, a variable indicating the susceptibility to cracking is also used.

11. The method according to any of the preceding claims, **characterized in that** on the basis of one or more variables, a set value is determined for the duration of the movement, and the movement (F) is controlled in such a way that the set value is met.

12. The method according to claim 11, **characterized in that** the set value is determined for the duration of the movement at least on the basis of the diameter (D) of the tree.

13. The method according to any of the preceding claims, **characterized in that** on the basis of one or more variables, a set value is determined for the deceleration of the movement at the end, and the movement (F) is controlled in such a way that the set value is met.

14. The method according to any of the preceding claims, **characterized in that** the movement is implemented by releasing pressurized medium for a short time from an actuator driven by pressurized medium and supporting the load caused by the tree.

15. The method according to claim 14, **characterized in that** at least one of the following operating values of a valve releasing pressurized medium is adjusted: the aperture, the duration of the aperture, and the closing rate of the aperture.

16. A control apparatus for a tree harvesting machine, which tree harvesting machine comprises a tree-supporting part (1) with a feeding device (2) for feeding the tree in its longitudinal direction and a cross-cutting saw (5) for cutting the tree at selected locations, and a boom assembly (6) or the like for supporting said part (1), wherein the control apparatus comprises a control and control means for the cross-cutting saw (5), and a control means (10) for controlling the movement of the tree supporting part (1) in such a way that the control means (10) causes a dropping movement (F) of the part (1) and the tree to be cut, which movement compensates for at least a part of the force caused by the weight of the tree and tending to cleave the tree at the cross-cutting point, the apparatus comprising one or more sensors for determining one or more variables having influence on the dropping movement (F) of the tree to be cut, and the apparatus also comprising computing and control means which are connected with the sensors and arranged to determine the operating values of the control means (10) controlling the dropping movement on the basis of the variable/variables, and to control said control means (10) according to the operating values, **characterized in that**
- said one or more sensors comprise one or more position sensors (A1) placed in the boom assembly (6) and arranged to determine the extension (s) of the boom assembly (6); or
- the sensor is arranged to determine the load caused by the supporting of the tree (R) and the boom assembly (6),
and the computing and control means are arranged to determine the operating values of the control means (10) that control the dropping movement occurring after the moment of starting the dropping movement.

17. The apparatus according to claim 16, **characterized in that** the control of the cross-cutting saw (5), the control means of the cross-cutting saw, or the means detecting the position of the cross-cutting saw are connected to the control means (10) having influence on the movement of the tree supporting part (1) in such a way that at the moment of operation of the saw (5), the control means (10) having influence on the movement of the tree supporting part (1) automatically causes the dropping movement.

18. The apparatus acording to claim 16 or 17, **characterized in that** the sensor is a pressure sensor (M2) which is arranged in the pressurized medium system of the boom assembly to determine the pressure cuased by the supporting of the tree (R) and the boom assembly (6).

19. The apparatus according to any of the preceding claims 16 to 18, **characterized in that** it also comprises sensors (M1, A2, A3) measuring one or more variables indicating the size of the tree, said sensors being connected to said computing and control means.

20. The apparatus according to any of the preceding claims 16 to 19, **characterized in that** the control means (10) is a valve which is connected to an actuator driven by pressurized medium and being arranged in the boom assembly (6) to receive the load caused by the supporting of the tree to be cut.

21. The apparatus according to claim 20, **characterized in that** the computing and control means are arranged to adjust at least one of the following operating values of a valve releasing pressurized medium:
the aperture, the duration of the aperture, and the closing rate of the aperture.

## Patentansprüche

1. Steuerungsverfahren für eine Baumerntemaschine, wobei die Baumerntemaschine einen Baumabstützteil (1) mit einem Zuführmittel (2) zum Zuführen eines Baums in dessen Längsrichtung und eine quer schneidende Säge (5) zum Zersägen des Baums an ausgewählten Stellen umfasst, wobei der Teil (1) durch eine Auslegeranordnung (6) oder dergleichen gelagert ist und der Baumabstützteil (1) in dem Augenblick der Betätigung der quer schneidenden Säge (5) nach unten bewegt wird, vorzugsweise automatisch mittels der Steuerungsautomatik der Baumerntemaschine, so dass die Kraft, die durch das Gewicht des Baums verursacht wird und dazu neigt, den Baum (R) an der Sägestelle (K) zu biegen und **dadurch** dazu neigt, den Baum zu spalten, zumindest teilweise kompensiert wird, **dadurch gekennzeichnet, dass** die Bewegung, die die nach dem Augenblick ihres Beginns auftretende Bewegung ist, auf der Basis von einer oder mehreren der folgenden Variablen gesteuert wird, die vor dem Augenblick des Querschneidens gemessen werden:
- die Erstreckung (s) der Auslegeranordnung (6);
- die Kraft (F2), die durch das Abstützen des Baums und durch die Auslegeranordnung (6) verursacht wird, oder eine davon abhängige Variable.

2. Verfahren nach Anspruch 1, **dadurch gekennzeichnet, dass** die Erstreckung (s) mittels eines oder mehrerer Positionssensoren (A1) der Auslegeranordnung (6) gemessen wird.

3. Verfahren nach Anspruch 1, **dadurch gekennzeichnet, dass** der durch die Kraft (F2) verursachte Druck von dem druckbeaufschlagten Mediumsystem der Auslegeranordnung (6) aus gemessen wird.

4. Verfahren nach irgendeinem der vorangehenden Ansprüche, **dadurch gekennzeichnet, dass** eine oder mehrere Variablen, die mit der Größe des Baums (R) und vorzugsweise auch mit der Position des Baums korrelieren, ebenfalls bestimmt und als eine Variable verwendet werden.

5. Verfahren nach Anspruch 4, **dadurch gekennzeichnet, dass** eine Variable mindestens eine der folgenden ist: das Gewicht des Baums, die durch den Baum verursachte Last (F1) und der Durchmesser (D) des Baums.

6. Verfahren nach Anspruch 1 und 4 oder Anspruch 3 und 4, **dadurch gekennzeichnet, dass** sowohl die Kraft (F2) oder eine davon abhängige Variable wie beispielsweise der Druck als auch eine Variable, die mit der Größe des Baums und vorzugsweise auch mit der Position des Baums korreliert, bestimmt werden.

7. Verfahren nach Anspruch 6, **dadurch gekennzeichnet, dass** sowohl die Kraft (F2) oder eine davon abhängige Variable wie beispielsweise der Druck als auch das Gewicht des Baums oder die durch den Baum verursachte Last (F1) bestimmt werden.

8. Verfahren nach irgendeinem der vorangehenden Ansprüche, **dadurch gekennzeichnet, dass** auf der Basis von einer oder mehreren Variablen ein Sollwert für die Beschleunigung bestimmt wird und die Bewegung (F) in einer solchen Weise gesteuert wird, dass der Sollwert eingehalten wird.

9. Verfahren nach Anspruch 8, **dadurch gekennzeichnet, dass** der Sollwert für die Beschleunigung zumindest auf der Basis der erwarteten Beschleunigung bestimmt wird.

10. Verfahren nach Anspruch 9, **dadurch gekennzeichnet, dass** bei der Bestimmung des Sollwerts für die Beschleunigung ferner eine Variable verwendet wird, die die Bruchneigung angibt.

11. Verfahren nach irgendeinem der vorangehenden Ansprüche, **dadurch gekennzeichnet, dass** auf der Basis von einer oder mehreren Variablen ein Sollwert für die Dauer der Bewegung bestimmt wird und die Bewegung (F) in einer solchen Weise gesteuert wird, dass der Sollwert eingehalten wird.

12. Verfahren nach Anspruch 11, **dadurch gekennzeichnet, dass** der Sollwert für die Dauer der Bewegung zumindest auf der Basis des Durchmessers (D) des Baums bestimmt wird.

13. Verfahren nach irgendeinem der vorangehenden Ansprüche, **dadurch gekennzeichnet, dass** auf der Basis von einer oder mehreren Variablen ein Sollwert für die Verzögerung der Bewegung am Ende bestimmt wird und die Bewegung (F) in einer solchen Weise gesteuert wird, dass der Sollwert eingehalten wird.

14. Verfahren nach irgendeinem der vorangehenden Ansprüche, **dadurch gekennzeichnet, dass** die Bewegung ausgeführt wird, indem druckbeaufschlagtes Medium kurzzeitig von einer durch das druckbeaufschlagte Medium angetriebenen Betätigungsvorrichtung abgelassen und die durch den Baum verursachte Last gehalten wird.

15. Verfahren nach Anspruch 14, **dadurch gekennzeichnet, dass** mindestens einer der folgenden Betriebswerte eines Ventils, das druckbeaufschlagtes Medium ablässt, eingestellt wird: die Öffnung, die Dauer der Öffnung und die Schließgeschwindigkeit der Öffnung.

16. Steuerungsvorrichtung für eine Baumerntemaschine, wobei die Baumerntemaschine einen Baumabstützteil (1) mit einem Zuführmittel (2) zum Zuführen des Baums in dessen Längsrichtung und eine quer schneidende Säge (5) zum Zersägen des Baums an ausgewählten Stellen und eine Auslegeranordnung (6) oder dergleichen zum Abstützen des Teils (1) umfasst, wobei die Steuerungsvorrichtung eine Steuerung und ein Steuerungsmittel für die quer schneidende Säge (5) sowie ein Steuerungsmittel (10) zur Steuerung der Bewegung des Baumabstützteils (1) in einer solchen Weise, dass das Steuerungsmittel (10) eine Fallbewegung (F) des Teils (1) und des zu zersägenden Baums verursacht, wobei die Bewegung zumindest einen Teil der Kraft kompensiert, die durch das Gewicht des Baums verursacht wird und dazu neigt, den Baum an der Quersägestelle zu spalten, umfasst, wobei die Vorrichtung einen oder mehrere Sensoren zur Bestimmung von einer oder mehreren Variablen umfasst, die Einfluss auf die Fallbewegung (F) des zu zersägenden Baums haben, und wobei die Vorrichtung ferner Rechen- und Steuerungsmittel umfasst, die an die Sensoren angeschlossen und so angeordnet sind, dass sie die Betriebswerte des Steuerungsmittels (10), das die Fallbewegung basierend auf der bzw. den Variablen steuert, bestimmen und das Steuerungsmittel (10) gemäß den Betriebswerten steuern, **dadurch gekennzeichnet, dass**
- einer oder mehrere Sensoren einen oder mehrere Positionssensoren (A1) umfassen, die in der Auslegeranordnung (6) positioniert und so angeordnet sind, dass sie die Erstreckung (s) der Auslegeranordnung (6) bestimmen; oder
- der Sensor so angeordnet ist, dass er die durch das Abstützen des Baums (R) und die Auslegeranordnung (6) verursachte Last bestimmt
und die Rechen- und Steuerungsmittel so angeordnet sind, dass sie die Betriebswerte des Steuerungsmittels (10) bestimmen, das die Fallbewegung steuert, die nach dem Augenblick des Beginns der Fallbewegung auftritt.

17. Vorrichtung nach Anspruch 16, **dadurch gekennzeichnet, dass** die Steuerung der quer schneidenden Säge (5), das Steuerungsmittel der quer schneidenden Säge oder das Mittel zum Erkennen der Position der quer schneidenen Säge in einer solchen Weise an das die Bewegung des Baumabstützteils (1) beeinflussende Steuerungsmittel (10) angeschlossen sind, dass das die Bewegung des Baumabstützteils (1) beeinflussende Steuerungsmittel (10) im Augenblick des Betriebs der Säge (5) automatisch die Fallbewegung verursacht.

18. Vorrichtung nach Anspruch 16 oder 17, **dadurch gekennzeichnet, dass** der Sensor ein Drucksensor (M2) ist, der im druckbeaufschlagten Mediumsystem der Auslegeranordnung so angeordnet ist, dass er den Druck bestimmt, der durch das Abstützen des Baums (R) und die Auslegeranordnung (6) verursacht wird.

19. Vorrichtung nach irgendeinem der vorangehenden Ansprüche 16 bis 18, **dadurch gekennzeichnet, dass** sie ferner Sensoren (M1, A2, A3) umfasst, die eine oder mehrere Variablen messen, die die Größe des Baums angeben, wobei die Sensoren an die Rechen- und Steuerungsmittel angeschlossen sind.

20. Vorrichtung nach irgendeinem der vorangehenden Ansprüche 16 bis 19, **dadurch gekennzeichnet, dass** das Steuerungsmittel (10) ein Ventil ist, das an eine Betätigungsvorrichtung angeschlossen ist, die durch das druckbeaufschlagte Medium angetrieben wird und so in der Auslegeranordnung (6) angeordnet ist, dass sie die durch das Abstützen des zu zersägenden Baums verursachte Last aufnimmt.

21. Vorrichtung nach Anspruch 20, **dadurch gekennzeichnet, dass** die Rechen- und Steuerungsmittel so angeordnet sind, dass sie mindestens einen der folgenden Betriebswerte eines Ventils einstellen, das druckbeaufschlagtes Medium ablässt: die Öffnung, die Dauer der Öffnung und die Schließgeschwindigkeit der Öffnung.

## Revendications

1. Procédé de commande destiné à une machine récolteuse d'arbres, dans lequel la machine récolteuse d'arbres comprend une partie de support d'arbre (1) dotée d'un moyen d'alimentation (2) pour amener un arbre dans sa direction longitudinale et une tronçonneuse (5) pour couper l'arbre à des endroits choisis, dans lequel ladite partie (1) est supportée par un ensemble de flèche (6) ou analogue, et au moment de l'action de la tronçonneuse (5), la partie de support d'arbre (1) est déplacée vers le bas, de préférence automatiquement au moyen des automatismes de commande de la machine récolteuse d'arbres, de façon à ce que la force occasionnée par le poids de l'arbre, tendant à courber l'arbre (R) au niveau du point de coupe (K) et tendant ainsi à fendre l'arbre, soit au moins partiellement compensée, **caractérisé en ce que** le mouvement, qui est un mouvement se produisant après le moment de son démarrage, est commandé sur la base d'une ou plusieurs variables qui suivent mesurées avant le moment du tronçonnage :
- l'extension (s) de l'ensemble de flèche (6) ;
- la force (F2) occasionnée par le fait de supporter l'arbre et par l'ensemble de flèche (6), ou une variable dépendant de celle-ci.

2. Procédé selon la revendication 1, **caractérisé en ce que** l'extension (s) est mesurée au moyen d'un ou plusieurs capteurs de position (A1) de l'ensemble de flèche (6).

3. Procédé selon la revendication 1**, caractérisé en ce que** la pression occasionnée par la force (F2) est mesurée à partir du système de milieu pressurisé de l'ensemble de flèche (6).

4. Procédé selon l'une quelconque des revendications précédentes, **caractérisé en ce qu'**une ou plusieurs variables se corrélant avec la taille de l'arbre (R) et de préférence également avec la position de l'arbre sont aussi déterminées et utilisées comme une variable.

5. Procédé selon la revendication 4, **caractérisé en ce qu'**une variable est au moins l'une des suivantes : le poids de l'arbre, la charge (F1) occasionnée par l'arbre, et le diamètre (D) de l'arbre.

6. Procédé selon les revendications 1 et 4 ou les revendications 3 et 4, **caractérisé en ce qu'**à la fois la force (F2) ou une variable dépendant de celle-ci, telle que la pression, et une variable se corrélant avec la taille de l'arbre et de préférence également avec la position de l'arbre sont déterminées.

7. Procédé selon la revendication 6, **caractérisé en ce qu'**à la fois la force (F2) ou une variable dépendant de celle-ci, telle que la pression, et le poids de l'arbre ou la charge (F1) occasionnée par l'arbre sont déterminés.

8. Procédé selon l'une quelconque des revendications précédentes, **caractérisé en ce que** sur la base d'une ou plusieurs variables, une valeur de consigne est déterminée pour l'accélération, et que le mouvement (F) est commandé d'une manière telle que la valeur de consigne est atteinte.

9. Procédé selon la revendication 8, **caractérisé en ce que** la valeur de consigne est déterminée pour l'accélération au moins sur la base de l'accélération attendue.

10. Procédé selon la revendication 9, **caractérisé en ce que** dans la détermination de la valeur de consigne pour l'accélération, une variable indiquant la tendance à fissurer est aussi utilisée.

11. Procédé selon l'une quelconque des revendications précédentes, **caractérisé en ce que** sur la base d'une ou plusieurs variables, une valeur de consigne est déterminée pour la durée du mouvement, et que le mouvement (F) est commandé d'une manière telle que la valeur de consigne est atteinte.

12. Procédé selon la revendication 11, **caractérisé en ce que** la valeur de consigne est déterminée pour la durée du mouvement au moins sur la base du diamètre (D) de l'arbre.

13. Procédé selon l'une quelconque des revendications précédentes, **caractérisé en ce que** sur la base d'une ou plusieurs variables, une valeur de consigne est déterminée pour la décélération du mouvement à la fin, et que le mouvement (F) est commandé d'une manière telle que la valeur de consigne est atteinte.

14. Procédé selon l'une quelconque des revendications précédentes, **caractérisé en ce que** le mouvement est exécuté en libérant le milieu pressurisé pendant une courte période à partir d'un actionneur entraîné par le milieu pressurisé et supportant la charge occasionnée par l'arbre.

15. Procédé selon la revendication 14, **caractérisé en ce qu'**au moins l'une des valeurs opérationnelles qui suivent d'une vanne libérant le milieu pressurisé est ajustée : l'ouverture, la durée de l'ouverture, et la vitesse de fermeture de l'ouverture.

16. Appareil de commande destiné à une machine récolteuse d'arbres, laquelle machine récolteuse d'arbres comprend une partie de support d'arbre (1) dotée d'un moyen d'alimentation (2) pour amener un arbre dans sa direction longitudinale et une tronçonneuse (5) pour couper l'arbre à des endroits choisis, et un ensemble de flèche (6) ou analogue pour supporter ladite partie (1), dans lequel l'appareil de commande comprend une commande et un moyen de commande pour la tronçonneuse (5), et un moyen de commande (10) destiné à commander le mouvement de la partie de support d'arbre (1) d'une manière telle que le moyen de commande (10) occasionne un mouvement de chute (F) de la partie (1) et de l'arbre à couper, lequel mouvement compense au moins une partie de la force occasionnée par le poids de l'arbre et tendant à fendre l'arbre au point de tronçonnage, l'appareil comprenant un ou plusieurs capteurs pour déterminer une ou plusieurs variables ayant une influence sur le mouvement de chute (F) de l'arbre à couper, et l'appareil comprenant aussi un moyen de calcul et de commande qui sont connectés avec les capteurs et agencés pour déterminer les valeurs opérationnelles du moyen de commande (10) commandant le mouvement de chute sur la base de la variable / les variables, et pour commander ledit moyen de commande (10) selon les valeurs opérationnelles, **caractérisé en ce que**
- lesdits un ou plusieurs capteurs comprennent un ou plusieurs capteurs de position (A1) placés dans l'ensemble de flèche (6) et agencés pour déterminer l'extension (s) de l'ensemble de flèche (6) ; ou
- le capteur est agencé pour déterminer la charge occasionnée par le fait de supporter l'arbre (R) et l'ensemble de flèche (6),
et le moyen de calcul et de commande sont agencés pour déterminer les valeurs opérationnelles du moyen de commande (10) qui commande le mouvement de chute après le moment de démarrage du mouvement de chute.

17. Appareil selon la revendication 16, **caractérisé en ce que** la commande de la tronçonneuse (5), le moyen de commande de la tronçonneuse, ou le moyen détectant la position de la tronçonneuse sont connectés au moyen de commande (10) ayant une influence sur le mouvement de la partie de support d'arbre (1) d'une manière telle qu'au moment du fonctionnement de la tronçonneuse (5), le moyen de commande (10) ayant une influence sur le mouvement de la partie de support d'arbre (1) occasionne automatiquement le mouvement de chute.

18. Appareil selon la revendication 16 ou 17, **caractérisé en ce que** le capteur est un capteur de pression (M2) qui est agencé dans le système de milieu pressurisé de l'ensemble de flèche pour déterminer la pression occasionnée par le fait de supporter l'arbre (R) et l'ensemble de flèche (6).

19. Appareil selon l'une quelconque des revendications 16 à 18 précédentes, **caractérisé en ce qu'**il comprend également des capteurs (M1, A2, A3) mesurant une ou plusieurs variables indiquant la taille de l'arbre, lesdits capteurs étant connectés audit moyen de calcul et de commande.

20. Appareil selon l'une quelconque des revendications 16 à 19 précédentes, **caractérisé en ce que** le moyen de commande (10) est une vanne qui est connectée à un actionneur entraîné par le milieu pressurisé et étant agencé dans l'ensemble de flèche (6) pour recevoir la charge occasionnée par le fait de supporter l'arbre à couper.

21. Appareil selon la revendication 20, **caractérisé en ce que** le moyen de calcul et de commande sont agencés pour ajuster au moins l'une des valeurs opérationnelles qui suivent d'une vanne libérant le milieu pressurisé : l'ouverture, la durée de l'ouverture, et la vitesse de fermeture de l'ouverture.
